# EUROPEAN PATENT SPECIFICATION

(11) **EP 0 934 014 B1**
(45) Date of publication and mention of the grant of the patent: **28.08.2002**
(21) Application number: 97911545.8
(22) Date of filing: 23.10.1997
(51) Int. Cl.: A47J 41/00

(54) **INSULATING BOTTLE**
ISOLIERFLASCHE
BOUTEILLE THERMOS

(30) Priority: 28.10.1996 SE 9603928
(43) Date of publication of application: 11.08.1999
(73) Proprietor: Karlsson, Gunder, 115 32 Stockholm (SE)
(72) Inventor: Karlsson, Gunder, 115 32 Stockholm (SE)
(74) Representative: Larsson, Kjell
(86) International application number: SE9701775
(87) International publication number: WO98018374

(56) References cited:
- DE-A- 3 045 896
- DE-A- 4 441 499
- US-A- 5 314 086

## Description

### Technical Field

The invention is in the field of insulating bottles and more specifically relates to a new vacuum bottle, the use of which is very simple because the degree of filling, the kind of contents and the liquid level can easily be observed.

### Background of the invention

Insulating containers for beverages commonly known as thermoses, or more correctly vacuum bottles, are common today for keeping beverages hot or cold. They fulfil important demands for people of today. When somebody is going on picnic and there is no possibility to heat or cool beverages, a thermos will enable you to preserve the intended temperature of the beverage for considerable time periods. When a larger amount of beverage is prepared which is not going to be used instantly, a thermos allows you to store the beverage for long periods until consumed later. Thermoses are also used to keep food such as hot dishes or ice cream, and also in this case thermoses are very useful.

There are many designs and constructions of thermoses. There is a variety of physical sizes and the proportions can as well vary. As material of construction for the thermos flask both steel and glass is used. For thermoses where insulation requirements are not that severe, even foam insulated plastic thermoses exist. A thermos need to be kept closed when not used in order to keep its contents in place and also not to let heat out or in. There are many such stoppers used. The main objective of the different designs of stoppers is to facilitate the pouring out of the contents of the thermos. To fill a cup from a thermos is difficult because the amount of liquid can not easily be established. If for instance somebody leans the thermos too much there is a risk that the hot beverage floods the cup which might lead to damages because of the high temperature of the liquid. On the other hand if no liquid appears when you attempt to pour, you become unsure whether you have really opened the plug or not. Most devices for closing have some means of indicating whether they are in open or closed position. The problem is that the way this is accomplished is in most cases neither logic nor easy to understand. The system for indicating the open state varies so much between different thermoses that you seldom can tell whether a thermos, which you have not previously encountered, is closed or not. A special variety of thermoses is the pump-thermos. Such a thermos is equipped with a pumping device. This device is integrated into the stopper. Large thermoses benefit greatly from pumping devices because you do not have to lift a heavy thermos in order to fill a cup. You just lift up your cup close to the nozzle and pump. However the earlier mentioned disadvantages are not eliminated. When pumping you have to know the degree of filling of the thermos in order to pump with the right force. If you pump too quickly there is a risk that the hot beverage will flow too quickly and flood your cup and maybe hurt someone. The situation is quite analogous when no liquid streams out of the nozzle. You begin to wonder if you have opened the thermos or if you are not pumping frenetically enough or if in fact there is no beverage left in the thermos.

To estimate the amount inside a thermos bottle is difficult. A procedure often used is to shake the vacuum bottle from side to side. The sensation felt in the hand gives a clue about how much there is in the thermos. Experience shows however that the estimates based on shaking the bottle are not particularly accurate or useful.

If you remove the plug to look inside the vacuum flask, you still have problems. The neck of the thermos is quite narrow and you look down into a surface which is difficult to see and also to find out the distance to. The inner walls are highly reflecting and you often misjudge yourself when trying to locate the liquid level. Quite often you observe a thermos user, who first shakes the thermos from side to side, then removes the plug and looks down into the thermos and finally leans the thermos a little in order to find out if there is anything left. This shows that the thermoses of today have problems which have not been eliminated although thermoses have existed for many years. The above mentioned problems can be completely eliminated in an unexpected and elegant way by means of the new vacuum bottle according to the invention, as described below.

Another weakness of present vacuum bottles is that you can not see what kind of beverage or other contents there is in the thermos. At restaurants and at parties where e.g. both tea and coffee is served there is often great confusion over which thermos contains the desired drink. When the wrong beverage is poured into a cup you consume more beverage and there will be more washing-up to do. A guest at a party might need to try several thermoses before finding the beverage of his choice. Especially for tea lovers the search for the right thermos is tedious as there is quite often only a minimal number of tea-filled thermoses.

Ordinary thermoses are based on the Dewar flask. The Dewar flask is named after its inventor Sir James Dewar, a 19^{th} century chemist and physicist. It is a double walled flask of glass, the closed space between the walls of which has been evacuated to a very low pressure, and the walls facing the closed space are plated with silver. Said low pressure means that the conduction of heat between the inner wall and the outer wall is minimal. The pressure should be low enough for the mean free path of molecules to be longer than the distance between the walls of the Dewar flask. This occurs at pressures lower than 10⁻¹ torr (≅10 Pa). To really benefit from the vacuum insulation the pressure should preferably be lower than 10⁻³torr( ≅ 0,1 Pa). The inner surfaces are silver plated to keep heat radiation low.

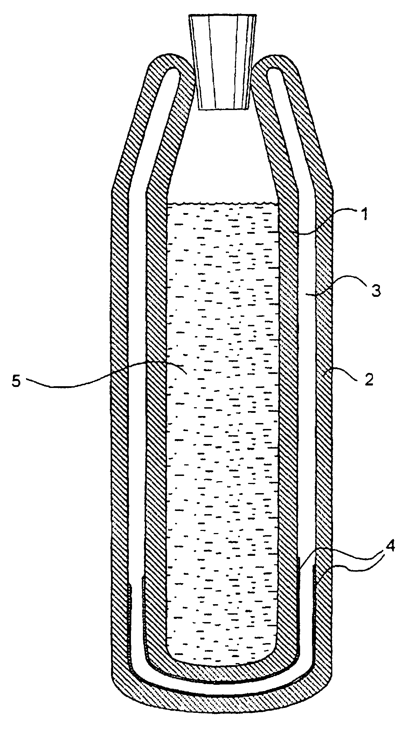

A schematic prior art vacuum bottle is illustrated in the figure. The figure is a longitudinal cross section of the flask which usually basically has an essentially rotational symmetry. The flask in the figure does not have any accentuated neck; most vacuum bottles have longer necks. For the sake of clarity in the illustration, the neck is de-emphasized. The flask has an inner wall marked 1, an outer wall 2, and there is a closed space formed between said inner and outer walls, marked 3. The silver plating marked 4 is shown only on part of the walls facing the closed space for clarity reasons. The inside of the inner flask forms the volume where the contents, e.g. a beverage, marked 5, is kept. The silver plating is important to keep the heat transfer by radiation low. The important material dependant parameter for radiation is the emissivity. The emissivity, ε, relates the radiation of a real body to that of an ideal body having the maximal radiation which is theoretically possible, the so called "black body". Glass is a very good black body and has an emissivity of ε = 0,9. Silver on the other hand has a low emissivity, viz. ε = 0,02 approximately. The silver plating of the prior art thermos flasks makes it impossible to see through the flask.

### General description of the invention

By means of the novel vacuum bottle according to the present invention the disadvantages of the prior art vacuum bottles are eliminated or at least substantially reduced.

More specifically the present invention relates to a vacuum bottle, which comprises a flask in the form of an inner flask and an outer flask with a closed space therebetween, evacuated to a low pressure, preferably <1000 Pa, said inner and outer flasks being of an at least partly or completely translucent, and preferably transparent, material, wherein the wall(s) of the inner flask and/or outer flask facing said closed evacuated space is (are) at least partially, and preferably completely, coated with a low emissivity material of such a thickness which makes it at least translucent and preferably transparent.

The invention demonstrates that the low emissivity coating applied need not be non-transparent or non-translucent. By applying a proper thickness of a low emissivity coating a vacuum bottle which is transparent, or at least translucent, is obtained, which is much easier to use than prior art vacuum bottles. The earlier mentioned problems with locating of the liquid level, estimating the degree of fill and knowing the kind of contents are solved in an elegant way.

Preferable embodiments of the vacuum bottle claimed are defined in the sub-claims. However, some specific embodiments will be described further below.

The figure shown in the drawing and referred to above in connection with the prior art thermos also represents the structure of the new vacuum bottle according to the invention. Thus, also in this case 1 represents the inner flask while 2 represents the outer flask and 3 the closed space therebetween. The novel material used as a partial or complete low emissivity coating on the walls of flasks 1 and 2 facing the closed space 3 is represented by reference numeral 4 and 5 is the beverage or other food product contained in the vacuum bottle.

Low-emissivity coatings are known from other fields of technology. Much of that knowledge can be used for the present invention now that the inventive idea has been disclosed. One example of such a technology is insulating window panes where low emissivity coatings are used to enhance the insulating capacity. However, from said technology it is not apparent how the problems of modern thermoses might be solved. Low emissivity coatings comprise metallic materials as well as metal oxides. By necessity a material which has a low emissivity for heat radiation need to be a good conductor of electricity. Metal oxides which have high electric conductivity are good materials for transparent heat reflecting coatings. In addition to the use as insulating window pane low emissivity coatings and transparent electrically conducting coatings these coatings have been applied on photovoltaic cells, on electrically heated windows and on substrates for LCDs( Liquid Crystal Displays). From these fields of technology it has been shown that various forms of the oxides SnO₂, In₂O₃, ZnO have good properties for these applications. To fully use the potential of these materials they are often doped with dopants that enhance their electrical conductivities. From the art of solid state physics and chemistry it is known which dopants are effective. The most commonly used dopants are Sn for In₂O₃, F and Sb for SnO₂ and Al and F for ZnO. In addition to these metal oxides there are other non-metal low emissivity materials for instance various forms of TiO₂ and WO₂. Metal films are also useful as low emissivity coatings. However, in order for a metal film to be transparent or translucent its thickness has to be very low. The thickness should preferably be in the range 2-25 nm. The most preferable elements are Ag, Au and Cu. Also combinations of metals and metal oxide films can be used. One example is Ag sandwiched between layers of TiO₂ which is a combination used for low emissivity window panes. The TiO₂ layers decrease the reflection losses and thereby increase the transmission of the visible spectrum.

Depending on the means available to produce a vacuum bottle according to the present invention and the intended application of the vacuum bottle various coatings can be selected. As mentioned earlier there are many such coatings developed for other applications. It should be noted that the material used here should be a transparent low emissivity coating. For solar collectors there are special materials used which are known as selectively absorbing materials. The selectively absorbing materials absorb the short wave radiation but have a low emissivity for long wave heat radiation. This is contrary to what is desired in connection with the present invention where a high transmission of the visible part of the spectrum is desired. In US Patent No. 4,399,919 the use of such materials in thermoses is mentioned. However, this patent gives no guidance on how to achieve the effects of the present invention.

Low emissivity materials such as the doped versions of In₂O₃, SnO₂ and ZnO can achieve emissivities as low as <10% for long wave heat radiation while the transmission of visible light can be as high as >80%. Scientists within the field of low emissivity coatings have shown that if a material is used having a low resitivity the thickness of the coating need not to be as thick as that of a higher resistivity material. The lowest resitsivities of metal oxides range around 10⁻⁴Ohm-cm. With such materials the thickness can be as low as 300 nm to achieve emissivities ≅ 10%. Higher thicknesses will lead to still lower emissivities. With less efficient low emissivity materials higher thicknesses, up to 2000nm, might be needed. The heat losses can subsequently be held acceptably low, less than 20°C in 10 hours. Even if the radiative heat losses might be marginally higher for a transparent low-emissivity coating compared to the traditional solid silver plating, you may in many cases compensate for this by for instance improving heat insulation of the stopper. With higher emissivities the rate of heat loss increases. The highest acceptable emissivity depends of course on the intended application of the thermos. An example illustrating this is the following: a 200 ml flask filled with hot beverage at 75°C and with a low emissivity coating of ε = 10% loses approx 2°C/hour, if the coating has ε = 20% the rate of heat loss is twice as high (taking radiation only into consideration). Generally the emissivity of the coating should be below 40% to be useful for hot beverages.

The vacuum bottle is generally made by joining together parts of glass. The way this is done varies. There are methods where you attach an inner flask to a top outer flask and then to a bottom outer part. However there are also flasks where the subcomponents are joined longitudinally. Whichever way the parts are put together, from a coatings point of view the joining of glass parts involves melting of the glass which leads to problems with low emissivity coatings. The low emissivity coating will be damaged in the joint area. To coat the parts used to form the flask before they are melted together will have the disadvantage of leaving parts of the flask without any coating, which will compromise heat insulation somewhat. The advantage of coating before flask joining is that the surfaces to be coated are better accessible and rather conventional methods might be used to coat the parts in question.

Another way is to perform the coating operation after formation of the flask but before the evacuation and sealing operation. The disadvantage is that only a few methods have been tried for this application. Methods that might be used are electroless metalisation, decomposition of precursors of metal oxides, sol-gel processes. Electroless deposition is already used today to coat thermoses. The baths used, however, are not proper when it comes to deposit thin controlled thickness. The deposition time is shorter than the time it takes to fill and empty the space to be coated. Plating baths for slower deposition of silver are described in "Electroless Plating" ISBN 936569-07-7 a standard textbook on electroless plating. The chapter about electroless silver plating describes on page 454 the use of Di-iodotyrosin as a deccelerant to keep plating speed down. It is possible to achieve plating speeds below 5 nm/minute. This gives plating times longer than 3 minutes to achieve 15 nm of Ag. The advantage of electroless plating is that the thickness is evenly distributed. Other metals can also be plated by electroless methods for instance Au, Cu, Ni and Co and also the platinum metals.

A metal oxide might be coated by depositing a precursor from a solution or slurry on the inner volume. A problem is that the thickness of the deposit has to be controlled. If for instance a solution of a precursor, such as tin chloride, is introduced there is a problem when you start to evaporate the solvent. If you have too much of solvent most of the tin chloride will deposit in the lower part of the thermos. There are, however, some techniques used by technicians in the field of coating technology which may be helpful. Simple means such as spinning the bottle around its axis during the deposition process will greatly enhance uniformity of the deposit.

The vacuum bottle of this invention can be used in many creative ways where its transparency can be used. It might be fitted into a transparent outer cover or it might be fitted into a holder only.

The thermos need not be fully transparent. It is obvious that the advantages are preserved even if the flask is translucent only. This can be achieved by using a translucent outer cover, frost treatment of the glass or by modifying the coating.

It is also obvious that for aesthetic reasons the bottle need not be transparent at all at its perimeter. The vacuum bottle can be placed in outer covers which only expose part of the thermos flask but still the visibility of the contents of the flask could be sufficient to allow the user to take advantage of all effects of the invention. It is also quite possible to make the coating such as to expose only parts of the contents. Quite aesthetically pleasing is to place the flask into a bottom holder and a top holder and join these with a handle. The potential of the invention can be realised in many different ways. Most importantly is, however, to keep the observability high of the contents of the flask.

A possibility which is very attractive and further facilitates the use of a vacuum bottle is to place a thermometer therein, e.g. in contact with the inner flask. Thereby it is possible to know if the beverage or other contents still is keeping its temperature. The thermometer might be a conventional one, for instance a column of liquid or a thermometer using liquid crystals.

## Claims

1. A vacuum bottle, which comprises a flask in the form of an inner flask and an outer flask with a closed space therebetween, evacuated to a low pressure, preferably <1000 Pa, said inner and outer flask being of an at least partly or completely translucent, and preferably transparent, material, wherein the wall of the inner flask and/or outer flask facing said closed evacuated space is(are) at least partially, and preferably completely, coated with a low emissivity material of such a thickness which makes it at least translucent and preferably transparent.

2. A vacuum bottle according to claim 1, wherein said low emissivity material is selected from metals and/or metal oxides, preferably with a transmission of visible light higher than 50%, more preferably higher than 60%, most preferably higher than 70%, and especially higher than 80%.

3. A vacuum bottle according to claim 2, wherein the thickness of the low emissivity material is 10-2000 nm, preferably 50-2000 nm, when said material is a metal oxide and 2-100 nm, preferably 2-70 nm, and more preferably 2-30 nm, when said material is a metal.

4. A vacuum bottle according to any one of claims 2 and 3, wherein said metal is selected from Cu, Ag and Au, the thickness in the case of Cu and Ag preferably being 2-30 nm and in the case of Au preferably being 4-50 nm.

5. A vacuum bottle according to any one of claims 2 and 3, wherein said metal is selected from Ni, Co, Rh, Pt, Pd and Ru, the coating thereof preferably having been deposited by electroless plating and the thickness thereof preferably being 5-70 nm.

6. A vacuum bottle according to any one of claims 2-5, whrein said metal oxide is selected from SnO₂, In₂O₃, ZnO, TiO₂, WO₂, (In, Sn)₂O₃ and (Sn, Sb) (O, F)₂.

7. A vacuum bottle according to any one of the preceding claims, wherein the inner flask contains a temperature recording means readable from the outside of the vacuum bottle, especially a thermometer, which has preferably been attached to the inner flask.

8. A vacuum bottle according to any one of the preceding claims, wherein said vacuum bottle is surrounded by an outer cover designed or mounted in such a way that the major part of the vacuum bottle remains visible.

9. A vacuum bottle according to any one of the preceding claims, wherein said inner and/or outer flasks are of glass.

10. A vacuum bottle according to any one of the preceding claims, wherein said closed space has been formed by joining the inner and outer flasks together in the neck portion of the vacuum bottle.

## Patentansprüche

1. Vakuumflasche, die einen Kolben in der Form eines inneren Kolbens und eines äußeren Kolbens mit einem abgeschlossenen Raum dazwischen umfasst, der auf einen niedrigen Druck, vorzugsweise <1000 Pa, evakuiert ist, wobei der innere und der äußere Kolben aus einem wenigstens teilweise oder vollständig diaphanen und vorzugsweise transparenten Material bestehen, wobei die Wand/Wände des inneren Kolbens und/oder äußeren Kolbens, die dem abgeschlossenen, evakuierten Raum zugewandt ist/sind, wenigstens teilweise und vorzugsweise voilständig mit einem Material mit niedrigem Emissionsvermögen einer Dicke beschichtet ist/sind, durch die sie wenigstens diaphan und vorzugsweise transparent wird/werden.

2. Vakuumflasche nach Anspruch 1, wobei das Material mit niedrigem Emissionsvermögen aus Metallen und/oder Metalloxiden mit einer Durchlässigkeit für sichtbares Licht von vorzugsweise mehr als 50 %, noch besser mehr als 60 %, am besten mehr als 70 % und insbesondere mehr als 80 % ausgewählt wird.

3. Vakuumflasche nach Anspruch 2, wobei die Dicke des Materials mit niedrigem Emissionsvermögen, wenn es sich bei dem Material um ein Metalloxid handelt, 10-2000 nm, vorzugsweise 50-2000 nm, und wenn es sich bei dem Material um ein Metall handelt, 2-100 nm, vorzugsweise 2-70 nm und noch besser 2-30 nm beträgt.

4. Vakuumflasche nach einem der Ansprüche 2 und 3, wobei das Metall aus Cu, Ag und Au ausgewählt wird, und die Dicke im Fall von Cu und Ag vorzugsweise 2-30 nm und im Fall von Au vorzugsweise 4-50 nm beträgt.

5. Vakuumflasche nach einem der Ansprüche 2 und 3, wobei das Metall aus Ni, Co, Rh, Pt, Pd und Ru ausgewählt wird und die Beschichtung daraus vorzugsweise durch chemisches Beschichten aufgetragen worden ist und die Dicke derselben vorzugsweise 5-70 nm beträgt.

6. Vakuumflasche nach einem der Ansprüche 2-5, wobei das Metalloxid aus SnO₂, In₂O₃, ZnO, TiO₂, WO₂, (In, Sn)₂O₃ sowie (Sn, Sb)(O, F)₂ ausgewählt wird.

7. Vakuumflasche nach einem der vorangehenden Ansprüche, wobei der innere Kolben eine Temperaturaufzeichnungseinrichtung enthält, die von der Außenseite der Vakuumflasche aus abgelesen werden kann, und zwar insbesondere ein Thermometer, das vorzugsweise an dem inneren Kolben angebracht worden ist.

8. Vakuumflasche nach einem der vorangehenden Ansprüche, wobei die Vakuumflasche von einer äußeren Verkleidung umschlossen wird, die so konstruiert oder angebracht ist, dass der Großteil der Vakuumflasche sichtbar bleibt.

9. Vakuumflasche nach einem der vorangehenden Ansprüche, wobei der innere und/oder der äußere Kolben aus Glas sind.

10. Vakuumflasche nach einem der vorangehenden Ansprüche, wobei der abgeschlossene Raum ausgebildet worden ist, indem der innere und der äußere Kolben im Halsabschnitt der Vakuumflasche miteinander verbunden wurden.

## Revendications

1. Bouteille isolante, qui comporte un flacon ayant la forme d'un flacon intérieur et d'un flacon extérieur ayant un espace fermé entre ceux-ci, mis sous vide à une faible pression, de préférence < 1000 Pa, lesdits flacons intérieur et extérieur étant constitués d'un matériau au moins partiellement ou complètement translucide, et de préférence transparent, dans lequel la paroi du flacon intérieur et/ou du flacon extérieur dirigée vers ledit espace fermé mis sous vide est (sont) au moins partiellement, et de préférence entièrement, revêtus d'un matériau à faible émissivité ayant une épaisseur telle qu'elle le rend au moins translucide et de préférence transparent.

2. Bouteille isolante selon la revendication 1, dans laquelle ledit matériau à faible émissivité est sélectionné parmi des métaux et/ou des oxydes métalliques, de préférence ayant une transmission de lumière visible plus élevée que 50 %, de manière plus préférée plus élevée que 60 %, de la manière la plus préférée plus élevée que 70 %, et en particulier plus élevée que 80 %.

3. Bouteille isolante selon la revendication 2, dans laquelle l'épaisseur du matériau à faible émissivité est de 10 à 2000 nm, de préférence de 50 à 2000 nm, lorsque ledit matériau est un oxyde métallique et de 2 à 100 nm, de préférence de 2 à 70 nm, et de manière plus préférée de 2 à 30 nm, lorsque ledit matériau est un métal.

4. Bouteille isolante selon l'une quelconque des revendications 2 et 3, dans laquelle ledit métal est sélectionné parmi Cu, Ag et Au, l'épaisseur dans le cas de Cu et de Ag étant de préférence de 2 à 30 nm et dans le cas de Au étant de préférence de 4 à 50 nm.

5. Bouteille isolante selon l'une quelconque des revendications 2 et 3, dans laquelle ledit métal est sélectionné parmi Ni, Co, Rh, Pt, Pd et Ru, dont le revêtement a de préférence été déposé par plaquage autocatalytique et dont l'épaisseur est de préférence de 5 à 70 nm.

6. Bouteille isolante selon l'une quelconque des revendications 2 à 5, dans laquelle ledit oxyde métallique est sélectionné parmi SnO₂, In₂O₃, ZnO, TiO₂, WO₂, (In,Sn)₂O₃ et (Sn,Sb)(O,F)₂.

7. Bouteille isolante selon l'une quelconque des revendications précédentes, dans laquelle le flacon intérieur comporte des moyens d'enregistrement de température pouvant être lus à partir de l'extérieur de la bouteille isolante, en particulier un thermomètre, qui a de préférence été fixé sur le flacon intérieur.

8. Bouteille isolante selon l'une quelconque des revendications précédentes, dans lequel ladite bouteille isolante est entourée par un recouvrement extérieur conçu ou monté de telle manière que la majeure partie de la bouteille isolante reste visible.

9. Bouteille isolante selon l'une quelconque des revendications précédentes, dans laquelle lesdits flacons intérieur et/ou extérieur sont constitués de verre.

10. Bouteille isolante selon l'une quelconque des revendications précédentes, dans laquelle ledit espace fermé a été formé en reliant ensemble les flacons intérieur et extérieur dans la partie de col de la bouteille isolante.
